Europäisches Patentamt

European Patent Office

Office européen des brevets

(11) Numéro de publication: **0 442 235 A1**

# (12) DEMANDE DE BREVET EUROPEEN

(21) Numéro de dépôt: **90403781.9**

(22) Date de dépôt: **27.12.90**

(51) Int. Cl.⁵: **E05F 11/44**, E05F 11/42

(30) Priorité: **16.02.90 FR 9001900**

(43) Date de publication de la demande:
**21.08.91 Bulletin 91/34**

(84) Etats contractants désignés:
**AT BE DE ES GB IT NL SE**

(71) Demandeur: **BERTRAND FAURE AUTOMOBILE**
**8, rue Jean-Pierre Timbaud, B.P. 14**
**F-78391 Bois d'Arcy Cédex(FR)**

(72) Inventeur: **Baloche, Francois**
**//**
**61100 Carneille(FR)**

(74) Mandataire: **Madeuf, Claude Alexandre Jean**
**et al**
**CABINET MADEUF 3, avenue Bugeaud**
**F-75116 Paris(FR)**

(54) **Dispositif lève-vitre plus spécialement pour véhicule automobile.**

(57) Dispositif lève-vitre plus spécialement pour véhicule automobile, dans lequel une platine (1) fixée sur l'armature de la portière du véhicule considéré porte, à l'une de ses extrémités, un arbre (8) permettant la rotation d'un pignon (7) engrenant avec la denture (10a) d'un secteur (10) provoque la rotation autour d'un axe (11) de ce secteur (10) prolongé, à sa partie inférieure, par une demi-lune (10b) dentée en (12) pour coopérer avec la denture (13a) d'une autre demi-lune (13) montée sur un axe (14), caractérisé en ce que ces deux axes (11 et 14) placés dans un même plan horizontal perpendiculaire à la platine (1) supportant des bras (15, 16) dont l'entraînement en rotation est réalisé pour chaque bras par un axe (17) solidaire des demi-lunes (10b, 13) puis finalement la face avant des axes (11, 14) est inclinée d'un angle ∝ par rapport à la surface verticale de la platine (1) afin de disposer les bras (15, 16) suivant des plans permettant le guidage correct en hauteur (élévation et abaissement) de la glace galbée considérée de la portière.

EP 0 442 235 A1

La présente invention a pour objet un lève-vitre qui peut être utilisé dans des portières de véhicules divers quelle que soit la conception de la carrosserie de ce véhicule.

On rappellera d'abord que jusqu'à maintenant le lève-vitre de la portière de véhicule qui comportait des bras était divisé en deux grandes sections à savoir :

- les lève-vitres à bras rigides pour les glaces de portière plane,
- les lève-vitres à bras souple dans des glaces à portière galbée permettant ainsi de suivre par leur flexibilité le galbe des guides latéraux des glaces.

Lorsque ces solutions ne peuvent pas être utilisées, on était amené dans les portières de véhicules automobiles, à employer des mécanismes d'entraînement pour monter ou descendre les glaces qui comportaient des ensembles de câbles avec poulies de renvoi ou des ensembles à ressorts à spirale décalée permettant l'entraînement vers le haut ou vers le bas de la glace par des pignons engrenant dans les spires de chaque ressort. Cette description tirée de l'art antérieur montre à l'évidence qu'il fallait à chaque fois étudier le dispositif car aucune solution n'était standard. Dans le cas d'utilisation de bras souples, une résistance due à la flexion des bras était ressentie du fait du couple créé qui agissait sur la manivelle de commande. Dans le cas de câbles ou ressorts de poussée, le guidage était très aléatoire du fait des points d'attache soit du câble, soit du ressort sur le centre de la glace ou à l'extrémité basse du support de la glace.

La présente invention remédie à un inconvénient en créant un dispositif lève-glace qui s'adapte très facilement dans tous les cas.

Conformément à l'invention, le dispositif comprend une platine fixée sur l'armature de la portière du véhicule considéré et qui porte, à l'une de ses extrémités, un arbre permettant la rotation d'un pignon qui engrène avec la denture d'un secteur provoquant la rotation autour d'un axe de ce secteur prolongé, à sa partie inférieure, par une demi-lune dentée pour coopérer avec la denture d'une autre demi-lune montée sur un axe, ces deux axes placés dans un même plan horizontal perpendiculaire à la platine supportant des bras dont l'entraînement en rotation est réalisé pour chaque bras par un axe solidaire des demi-lunes puis finalement la face avant des axes est inclinée d'un angle ∝ par rapport à la surface verticale de la platine afin de disposer les bras suivant des plans permettant le guidage correct en hauteur (élévation et abaissement) de la glace galbée de la portière considérée.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation de face du dispositif lève vitre conforme à l'invention.

La fig. 2 est un plan partie en coupe correspondant à la fig. 1.

La fig. 3 montre un détail, à plus grande échelle, du dispositif de maintien de la glace sur le bras de levage.

La fig. 4 est une coupe, à grande échelle, d'un des éléments du dispositif lève vitre.

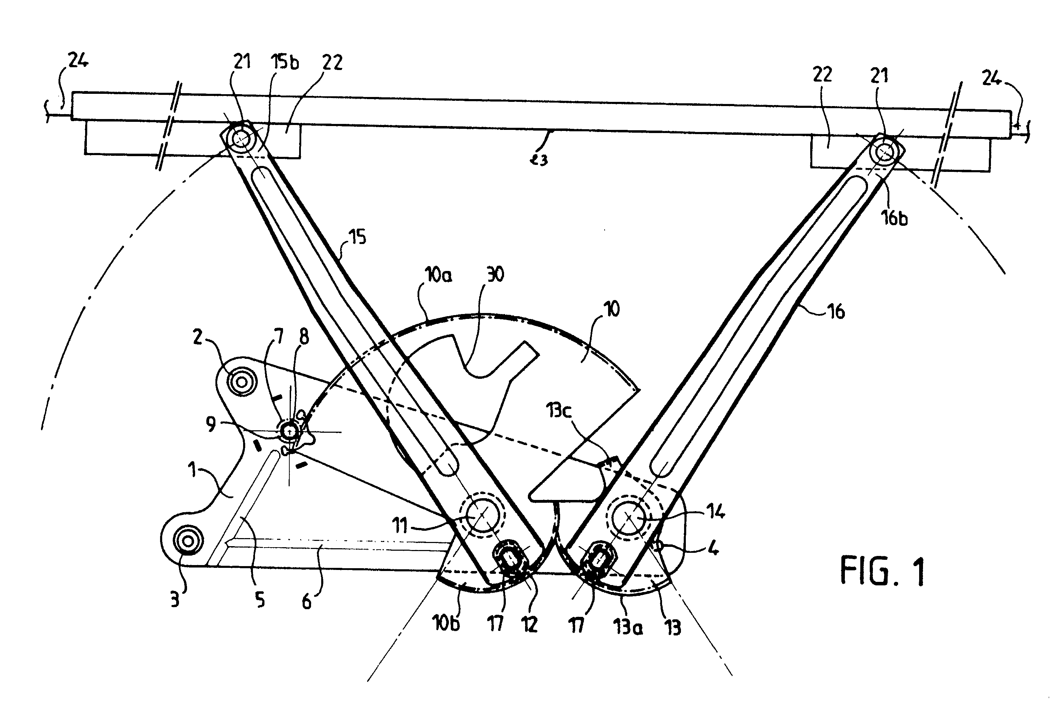

A la fig. 1, on a représenté une platine 1 de forme sensiblement en trapèze rectangle qui vient se fixer en 2, 3, 4 sur l'armature interne de la portière. Cette platine 2 étant rigidifiée par des lignes de gaufrage 5, 6 porte un palier 7 dans lequel peut tourner un arbre 8 entraînant un pignon 9 qui engrène normalement avec la denture 10a d'un secteur 10 monté sur un axe 11 solidaire de la platine 1. Le secteur denté 10 est prolongé, à sa partie inférieure, par une demi-lune 10b semi-circulaire dentée 12 afin de coopérer avec un deuxième secteur 13 de même diamètre comportant à sa périphérie une denture 13a identique à la denture 12. Ainsi, lorsque l'on entraîne, à l'aide de l'arbre 8, le pignon 9, celui-ci donne par engrènement avec la denture 10a du secteur 10 un mouvement de rotation avec ce secteur 10 autour de l'axe fixe 11. Le mouvement de rotation entraîne la demi-lune 10b qui engrène avec la denture 13a le deuxième secteur 13 monté sur l'axe fixe 14 solidaire de la partie droite de la platine 1.

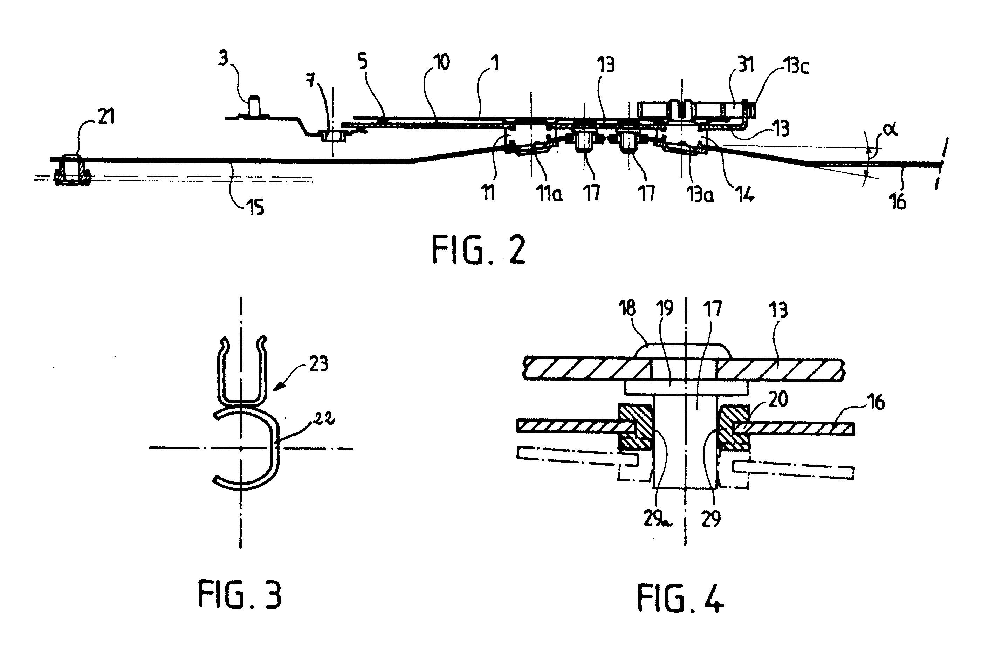

Sur les axes 11 et 14 sont montés des bras 15, 16 qui sont reliés, le bras 15 à la demi-lune 10b et le bras 16 à la lune 13. La jonction entre les bras 15 et 16 et les lunes 10b, 13 se fait par l'intermédiaire d'axes 17 fixés sur la périphérie extérieure des lunes 10b, 13 par l'intermédiaire de deux plateaux 18, 19 (voir fig. 4). Ces axes ont en section une forme sensiblement rectangulaire et sont reliés à la base des bras 15, 16 par des couronnes 29 introduits dans des trous 20 percés dans les bras 15, 16. Les couronnes 29 sont, en général, réalisés en matière plastique plus spécialement en matière synthétique grasse. Ces couronnes présentent un évidement central 29a à bord hémisphérique de façon à faciliter, d'une part, leur introduction sur les axes 17 et, d'autre part, donnant un léger jeu de façon à ce que les bras 15, 16 occupent une position adaptée au galbe des glaces des portières du véhicule, ce qui est complété par le fait que les axes fixes 11 et 14 affectent en section (voir fig. 2) une forme en trapèze rectangle dont la face avant 11a, 13a de chacun d'eux est inclinée d'un angle ∝ (voir fig. 2) correspondant lui aussi au galbe de la glace. En général, les axes 11 et 14 sont réalisés en matière coulée et l'angle ∝ est compris entre 1° et 25° plus spécialement entre 6° et 15°.

Finalement, l'extrémité supérieure 15b, 16b des bras 15, 16 porte des galets 21 coulissant dans des guides 22 (voir fig. 1). Une pince 23 en U est destinée à maintenir rigidement la glace 24 galbée considérée sur les bras 15, 16.

L'arbre 8 portant le pignon 9 peut être dans certains cas motorisé.

Comme on peut le voir aisément à la fig. 1, l'extrémité supérieure 13c de la demi-lune 13 est recourbée à angle droit pour limiter le mouvement des demi-lunes 10b, 13 afin, d'une part, de permettre l'abaissement au maximum de la glace considérée et, d'autre part, d'éviter le désengrénement des dentures coopérantes de ces deux demi-lunes. De plus, il est prévu un ressort en spirale 31 qui, en agissant sur l'extrémité 13c de la demi-lune 13, équilibre les forces de réaction de l'ensemble mécanique formant le lève-glace.

Il est à signaler également par mesure d'économie que la demi-lune 13 peut être découpée par tous moyens convenables dans la partie centrale du secteur 10 et celui-ci se trouve allégé du fait de l'ouverture 30 correspondante (voir fig. 1).

## Revendications

1. Dispositif lève-vitre plus spécialement pour véhicule automobile, dans lequel une platine (1) fixée sur l'armature de la portière du véhicule considéré porte, à l'une de ses extrémités, un arbre (8) permettant la rotation d'un pignon (7) engrenant avec la denture (10a) d'un secteur (10) provoque la rotation autour d'un axe (11) de ce secteur (10) prolongé, à sa partie inférieure, par une demi-lune (10b) dentée en (12) pour coopérer avec la denture (13a) d'une autre demi-lune (13) montée sur un axe (14), caractérisé en ce que ces deux axes (11 et 14) placés dans un même plan horizontal perpendiculaire à la platine (1) supportant des bras (15, 16) dont l'entraînement en rotation est réalisé pour chaque bras par un axe (17) solidaire des demi-lunes (10b, 13) puis finalement la face avant des axes (11, 14) est inclinée d'un angles ∝ par rapport à la surface verticale de la platine (1) afin de disposer les bras (15, 16) suivant des plans permettant le guidage correct en hauteur (élévation et abaissement) de la glace galbée considérée de la portière.

2. Dispositif selon la revendication 1, caractérisé en ce que les axes (11, 14) ont en section une forme de trapèze rectangle dont les faces inclinées avant forment un angles ∝ par rapport à la face arrière destinée à être parallèle au plan défini par la platine (1), ces axes (11, 14) étant réalisés en toute matière convenable et plus spécialement en matière coulée.

3. Dispositif selon l'une des revendications 1 et 2, caractérisé en ce que les axes (11, 14) qui présentent des faces inclinées avant par rapport à leurs faces arrière ont des angles d'inclinaison (∝) compris entre 1 et 25° en général de 6 à 15°.

FIG. 1

FIG. 2

FIG. 3

FIG. 4

EP 0 442 235 A1

# RAPPORT DE RECHERCHE EUROPEENNE

Numéro de la demande

## EP 90 40 3781

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 224 180  (HAMMERSTEIN) <br> * colonne 1, ligne 1 - ligne 42 * * colonne 4, ligne 22 - ligne 43; figure 1 * <br> — — — | 1 | E 05 F 11/44 <br> E 05 F 11/42 |
| A | DE-A-2 739 633  (BROSE) <br> * page 7, ligne 29 - page 10, ligne 23; figures 1-3,5,6 * <br> — — — | 1,3 | |
| A | US-A-3 367 196  (PACKETT) <br> * colonne 1, ligne 49 - colonne 2, ligne 56; figures 1-5 * <br> — — — | 1 | |
| A | FR-A-1 384 996  (VEB AUTOMOBILWERK EISENACH) <br> * page 1, colonne 2, ligne 34 - page 2, colonne 1, ligne 41; figures 1-3 * <br> — — — — — | 1 | |

| | DOMAINES TECHNIQUES RECHERCHES (Int. Cl.5) |
|---|---|
| | E 05 F |

Le présent rapport de recherche a été établi pour toutes les revendications

| Lieu de la recherche | Date d'achèvement de la recherche | Examinateur |
|---|---|---|
| La Haye | 24 mai 91 | GUILLAUME G.E.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
........................................................................
& : membre de la même famille, document correspondant